(19) Europäisches Patentamt
European Patent Office
Office européen des brevets

(11) Veröffentlichungsnummer: **0 240 465**
**A2**

(12) # EUROPÄISCHE PATENTANMELDUNG

(21) Anmeldenummer: **87810186.4**

(22) Anmeldetag: **30.03.87**

(51) Int. Cl.[4]: **C 09 B 67/22**
C 09 B 67/40, D 06 P 1/18,
D 06 P 3/54

(30) Priorität: **04.04.86 CH 1319/86**

(43) Veröffentlichungstag der Anmeldung:
**07.10.87 Patentblatt 87/41**

(84) Benannte Vertragsstaaten:
**BE CH DE FR GB IT LI**

(71) Anmelder: **CIBA-GEIGY AG**
**Klybeckstrasse 141**
**CH-4002 Basel (CH)**

(72) Erfinder: **Kaiser, Helga, Dr.**
**Im Deichelacker 9**
**D-7851 Efringen-Kirchen (DE)**

**Angliker, Hans-Jörg, Dr.**
**Neuwillerstrasse 7**
**CH-4153 Reinach (CH)**

**Eugster, Peter Ernst, Dr.**
**Schlossgartenweg 4**
**CH-4147 Aesch (CH)**

(54) **Farbstoffmisschungen.**

(57) Farbstoffmischungen, bestehend aus 75 bis 99 Gew.% eines Farbstoffes der Formel

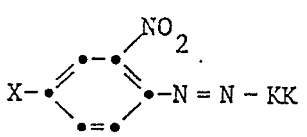

(1)

worin X Wasserstoff, Chlor, Brom oder Methyl und KK den Rest einer von wasserlöclichmachenden Gruppen freien Kupplungskomponente bedeutet, und 1 bis 25 Gew.% eines Farbstoffes der Formel

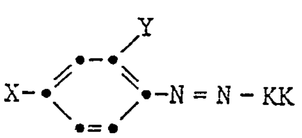

(2)

worin X und KK die angegebene Bedeutung aufweisen und Y Chlor oder Brom ist, eignen sich zum Färben von Polyestermaterialien.

EP 0 240 465 A2

**Beschreibung**

Farbstoffmischungen

Die Erfindung betrifft neue Farbstoffmischungen, Verfahren zu deren Herstellung sowie deren Verwendung zum Färben und Bedrucken von Textilmaterialien.

Farbstoffe der Formel

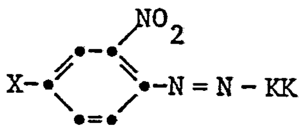
(1)

worin X Wasserstoff, Chlor, Brom oder Methyl und KK den Rest einer von wasserlöslichmachenden Gruppen freien Kupplungskomponente bedeutet, sind bekannt.

Ebenso sind Farbstoffe der Formel

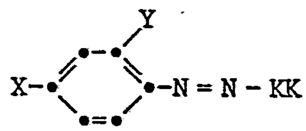
(2)

bekannt, worin X and KK die angegebene Bedeutung aufweisen und Y Chlor oder Brom ist. Die Farbstoffe der Formel (2) erfordern eine relativ aufwendige Synthese und zeigen unerwünschtes "Catalytic Fading".

Es wurde nun gefunden, dass überraschenderweise Farbstoffmischungen, bestehend aus 75 bis 99 Gew.% eines Farbstoffes der Formel (1) und 1 bis 25 Gew.% eines Farbstoffes der Formel (2) ein besseres Aufziehen zeigen als die Einzelfarbstoffe und ausserdem "Catalytic Fading" nicht oder nur in tolerierbarem Masse zeigen.

Gegenstand der vorliegenden Erfindung sind Farbstoffmischungen, bestehend aus 75 bis 99 Gew.% eines Farbstoffes der Formel

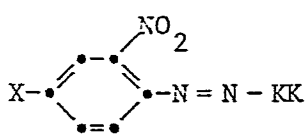
(1)

worin
X Wasserstoff, Chlor, Brom oder Methyl und
KK den Rest einer von wasserlöslichmachenden Gruppen freien Kupplungskomponente bedeutet,
und 1 bis 25 Gew.% eines Farbstoffes der Formel

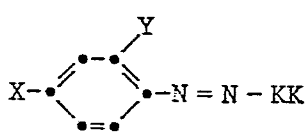
(2)

worin
X und KK die angegebene Bedeutung aufweisen und Y Chlor oder Brom ist.

Bevorzugte Farbstoffmischungen bestehen aus 85 bis 95 Gew.% eines Farbstoffes der Formel (1) und 5 bis 15 Gew.% eines Farbstoffes der Formel (2).

Die bevorzugte Bedeutung von X ist Wasserstoff und vor allem Chlor.

Als Kupplungskomponente KK kommen die in der Azochemie üblichen und aus der einschlägigen Literatur bekannten Kupplungskomponenten in Frage, sofern sie keine wasserlöslichmachenden Gruppen, also keine ionischen Gruppen, z.B. keine Sulfo-, Carboxyl- oder quaternären Ammoniumgruppen, enthalten (Kupplungskomponenten für Dispersions-Azofarbstoffe).

Aus der Vielzahl der Möglichkeiten seien beispielsweise erwähnt: Kupplungskomponenten der Benzolreihe, der Naphthalinreihe, der offenkettigen methylenaktiven Verbindungen (wie z.B. der Acylacetarylamide) sowie der heterocyclischen Reihe. Die heterocyclischen Kupplungskomponenten sind bevorzugt.

Beispiele für die genannten Reste von Kupplungskomponenten KK sind Reste aus der Reihe der Acylacetarylamide, Phenole, Pyridone, Chinoline, Pyrazole, Indole, Diphenylamine, Aniline, Aminopyridine, Pyrimidine, Pyrimidone, Naphthole, Naphthylamine, Aminothiazole, Thiophene oder Hydroxypyridine.

Besonders zu erwähnende Reste KK sind solche aus der Reihe der Acetoacetanilide, Phenole, Aniline, Diphenylamine, Naphthylamine, Naphthole, Indole, Chinoline, Pyridone, Pyrazole, Chinolone, Aminopyridine, insbesondere 2,6-Diaminopyridine, wobei die genannten heterocyclischen KK bevorzugt sind, insbesondere jene aus der Reihe der Aminopyrazole, Pyrazolone oder vor allem der Pyridone.

Bei den Aminopyrazolen und Pyrazolonen handelt es sich vor allem um solche der Formel

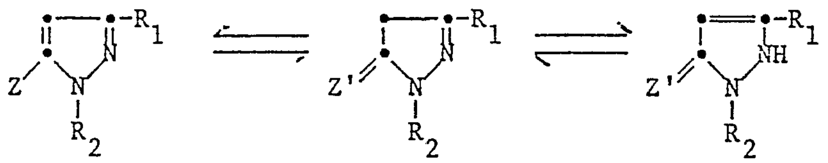 (3)

worin bedeuten: Z OH oder $NH_2$, Z′ O oder NH, $R_2$ H, $C_{1-4}$-Alkyl, Alkenyl, Cycloalkyl, Aryl, Benzyl oder Phenyläthyl und $R_1$ = $R_2$ oder $COOR_2$ oder $CONHR_2$ ist.

Beispiele für Reste KK aus der Pyridonreihe sind solche der Formel

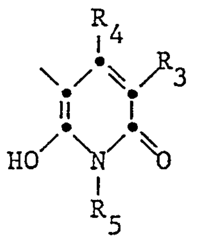 (4)

worin $R_3$ Alkyl, CN, $CONH_2$ oder $SO_2NH_2$, $R_4$ Alkyl und $R_5$ Wasserstoff, Alkenyl, Aryl oder vorzugsweise gegebenenfalls substituiertes $C_1$-$C_8$-Aklyl bedeuten.

Soweit in obigen Definitionen Alkylgruppen als solche oder in zusammengesetzten Gruppen als "gegebenenfalls substituiert" bezeichnet sind, kommen als Substituenten, sofern nichts anderes angegeben ist, z.B. folgende in Frage: Hydroxy, Cyano, Halogen (z.B. Chlor, Brom), $C_1$-$C_4$-Alkoxy, Phenoxy oder Phenyl (beide gegebenenfalls 1- bis 3fach substituiert durch Halogen, Methyl oder Methoxy), Amino, Alkylamino oder Dialkylamino. Die Alkylgruppen als solche oder in zusammengesetzten Gruppen weisen vorzugsweise 1 bis 8, insbesondere 1 bis 4, C-Atome, Alkenylgruppen vorzugsweise 2 bis 8, insbesondere 2 bis 4, C-Atome und Cycloalkylgruppen vorzugsweise 5 oder 6 C-Atome auf.

Unter Aryl wird vorzugsweise Naphthyl und insbesondere Phenyl verstanden, welches unsubstituiert oder beispielsweise durch $C_1$-$C_4$-Alkyl, $C_1$-$C_4$-Alkoxy oder Halogen substituiert ist.

Die besonders bevorzugten Kupplungskomponenten KK sind 1-Phenyl-3-methylpyrazolon-5 und 1-Ethyl-3-cyan-4-methyl-6-hydroxypyridon-2.

Die Kupplungskomponenten sind bekannt.

Einen weiteren Gegenstand der vorliegenden Erfindung bildet ein Verfahren zur Herstellung von Farbstoffmischungen, bestehend aus 75 bis 90 Gew.% eines Farbstoffes der Formel

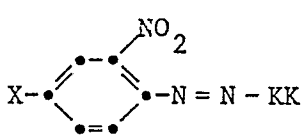 (1)

worin X Wasserstoff, Chlor, Brom oder Methyl und KK den Rest einer von wasserlöslichmachenden Gruppen freien Kupplungskomponente bedeutet, und 1 bis 25 Gew.% eines Farbstoffes der Formel

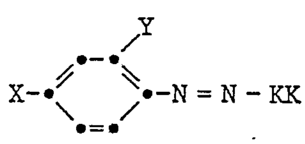 (2)

worin X und KK die angegebene Bedeutung aufweisen und Y Chlor oder Brom ist, dadurch gekennzeichnet, dass man ein Amin der Formel

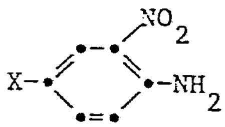

(5)

in einer wässrigen Halogenwasserstoffsäure der Formel HY diazotiert, anschliessend nach Zugabe weiterer Halogenwasserstoffsäure HY bei 20 bis 50° C während 0,5 bis 10 Stunden nachbehandelt und schliesslich die erhaltene Diazoniumsalzlösung auf eine Kupplungskomponente H-KK kuppelt.

Die Diazotierung- und Kupplungsreaktion kann nach üblichen Methoden durchgeführt werden, wie z.B. beschrieben in Ullmann's Enzyclopädie der technischen Chemie, Band 5 (1954), Seite 783 ff. Beispielsweise erfolgt die Diazotierung des Amins der Formel (5) mit einem Alkalinitrit, z.B. mit Natriumnitrit, in saurem Medium.Zweckmässig wird die Diazotierung bei Temperaturen von -10 bis 40° C, z.B. von Raumtemperatur (~ 15° C) bis 35° C, durchgeführt.

Im Anschluss an die Diazotierung gibt man weitere Halogenwasserstoffsäure HY zu, vorzugsweise 0,5 bis 3 Mol, insbesondere 0,5 bis 1 Mol, je Mol Diazoniumsalz und führt eine Nachbehandlung durch. Diese besteht z.B. im Schütteln oder Rühren der Diazoniumsalzlösung bei 20 bis 50° C, vorzugsweise 25 bis 45° C während 0,5 bis 10, vorzugsweise während 1 bis 6 Stunden. Anschliessend wird auf eine Kupplungskomponente H-KK gekuppelt. Während der Nachbehandlung erfolgt ein teilweiser Austausch der Nitrogruppe gegen Halogen. Dieser Austausch findet in geringem Masse auch bei langsamer Diazotierung statt.

Die Kupplung des diazotierten Amins auf die Kupplungskomponente erfolgt ebenfalls in bekannter Weise, beispielsweise in saurem, wässrigem oder wässrig-organischem Medium, vorteilhaft bei Temperaturen von -10 bis 30° C, insbesondere unter 10° C. Als Säuren verwendet man z.B. Salzsäure, Essigsäure, Schwefelsäure oder Phosphorsäure. Diazotierung und Kupplung kann beispielsweise im Eintopfverfahren, also im gleichen Reaktionsmedium, durchgeführt werden. Anschliessend wird die erhaltene Farbstoffmischung auf übliche Weise aufgearbeitet.

Eine weitere Methode zur Herstellung der erfindungsgemässen Farbstoffmischungen besteht darin, dass man die Farbstoffe der Formel (1) und (2) zusammengibt und miteinander vermischt oder schmilzt. Vorteilhaft setzt man der Mischung noch Dispergiermittel, zum Beispiel solche anionischer oder nichtionischer Natur, sowie Wasser zu und vermahlt die Mischung mit Hilfe von Mahlhilfsmitteln (z.B. Glaskugeln) zu einer gebrauchsfertigen Dispersion.

Alternativ können z.B. auch die einzelnen Komponenten (Einzelfarbstoffe) in der vorstehend beschriebenen Weise mit Dispergiermittel und Wasser vermahlen und erst die resultierenden Dispersionen gemischt werden, wodurch man ebenfalls zu gebrauchsfertigen Dispersionen der erfindungsgemässen Farbstoffmischungen kommt.

Anionische Dispergiermittel, die für obiges Verfahren in Betracht kommen, sind beispielsweise Kondensationsprodukte aus Naphthalinsulfonsäuren und Formaldehyd, insbesondere Dinaphthalinmethandisulfonate oder modifizierte Ligninsulfonate. Geeignete nichtionische Dispergiermittel sind z.B. Anlagerungsprodukte von etwa 3 bis 40 Mol Aethylenoxid an Alkylphenole, Fettalkohole oder Fettamine.

Sofern man die Einzelfarbstoffe durch Zusammenschmelzen vermischt, werden diese zu einer homogenen Schmelze zusammengeschmolzen, die man anschliessend abkühlen lässt und gegebenenfalls mit anionischen oder nichtionischen Dispergiermitteln vermahlt, wie oben beschrieben. Auf diese Weise erhält man ebenfalls gebrauchsfertige Dispersionen der erfindungsgemässen Farbstoffmischungen.

Verwendung finden die erfindungsgemässen Farbstoffmischungen zum Färben und Bedrucken von Textilmaterialien, welche mit Dispersionsfarbstoffen färbbar sind. Vor ihrer Verwendung werden die Farbstoffgemische vorteilhaft, sofern dies bei der Herstellung nicht schon geschah, in Farbstoffpräparate übergeführt. Hierzu kann man sie zerkleinern, so dass ihre Teilchengrösse im Mittel zwischen 0,01 und 10 µm beträgt. Das Zerkleinern kann in Gegenwart von Dispergiermitteln erfolgen.

Beispielsweise wird das getrocknete Farbstoffgemisch mit einem Dispergiermittel gemahlen oder in Pastenform mit einem Dispergiermittel geknetet und hierauf im Vakuum oder durch Zerstäuben getrocknet. Mit den so erhaltenen Präparaten kan man, nach Zugabe von Wasser, in langer Flotte (Flottenverhältnis grösser als 1:5) oder kurzer Flotte (Flottenverhältnis 1:1 bis 1:5) färben, klotzen oder bedrucken.

Die neuen Farbstoffmischungen ziehen aus wässriger Suspension oder Dispersion ausgezeichnet auf Textilmaterialien aus vollsynthetischen oder halbsynthetischen hochmolekularen Stoffen auf. Besonders geeignet sind sie zum Färben, Klotzen oder Bedrucken von Fasern, Fäden oder Vliesen, Geweben oder Gewirken, insbesondere Fasern, aus linearen, aromatischen Polyestern. Diese sind im allgemeinen Polykondensationsprodukt aus Terephthalsäure und Glykolen, besonders Aethylenglykol, oder Polykondensationsprodukte aus Terephthalsäure und 1,4-Bis-(hydroxymethyl)-hexahydrobenzol.

Man färbt die Polyesterfasern beispielsweise nach an sich bekannten Verfahren in Gegenwart von Carriern bei Temperaturen zwischen etwa 80 und 125° C, oder in Abwesenheit von Carriern unter Druck bei etwa 100 bis 140° C nach dem Ausziehverfahren. Ferner kann man diese Fasern mit den wässrigen Dispersionen der Farbstoffmischungen klotzen oder bedrucken und die erhaltene Imprägnierung bei etwa 140° bis 230° C fixieren, z.B. mit Hilfe von Wasserdampf, Kontakthitze oder heisser Luft.

Meist gibt man die üblichen, bereits genannten Dispergiermittel zu, die vorzugsweise anionisch oder

nichtionogen sind und auch im Gemisch miteinander verwendet werden können.

Beim Klotzen und Bedrucken kann man die üblichen Verdickungsmittel verwenden, z.B. modifizierte oder nichtmodifizierte natürliche Produkte, beispielsweise Alginate, Britischgummi, Gummi arabicum, Kristallgummi, Johannisbrotkernmehl, Tragant, Carboxymethylcellulose, Hydroxyäthylcellulose, Stärke oder synthetische Produkte, beispielsweise Polyacrylamide oder Polyvinylalkohole.

In den nachfolgenden Beispielen beziehen sich die Teil- und Prozentangaben auf das Gewicht, sofern nichts anderes angegeben ist. Die Temperaturen sind in Grad Celsius angegeben.

Beispiel 1

43,2 Teile 4-Chlor-2-nitroanilin werden in 120 Teilen Wasser mit 74 Vol.-Teilen einer wässrigen 10n-Salzsäure versetzt. Dann werden 0,3 Vol.-Teile eines gebräuchlichen Netzmittels zugesetzt und 1 Stunde bei Raumtemperatur gerührt. Dann diazotiert man bei ansteigender Temperatur über einen Zeitraum von 20 Minuten durch gleichmässige Zugabe von insgesamt 63 Vol.-Teilen einer wässrigen 4n-Natriumnitritlösung. Während der Diazotierung steigt die Temperatur des Reaktionsgemisches auf 30 bis 33° C an. Es werden nun weitere 25 Vol.-Teile einer wässrigen 10n-Salzsäure zugegeben und 5 Stunden bei 40° C im Wasserbad gerührt. Dann wird mit 5 g Kieselgur geklärt und man erhält eine gelb gefärbte Lösung der Diazoniumsalzmischung. Diese Lösung wird bei 20 bis 25° C in 30 Minuten gleichmässig zu einer Lösung aus 250 Vol.-Teilen Wasser, 25 Vol.-Teilen einer wässrigen 10n-Natronlauge und 45,4 Gew.-Teilen 3-Cyan-1-ethyl-6-hydroxy-4-methyl-2-pyridon gegeben.

Nach der Diazozugabe stellt man zur Vervollständigung der Kupplung mit ca. 43 bis 45 Vol.-Teilen einer wässrigen 10n-Natronlauge den pH in 30 Minuten auf 4,5 bis 5 und rührt weitere 30 Minuten nach. Die Kupplung ist beendet, wenn sich mit sodaalkalischer H-Säure-Lösung kein violetter Farbstoff mehr bildet.

Die gelbe Suspension wird anschliessend auf 95° C geheizt und 2 Stunden bei 95° C gerührt. Nach Abkühlen auf 60° C wird der Farbstoff abfiltriert, mit heissem Wasser salzfrei gewaschen und bei 80° C im Vakuumtrockenschrank bis zur Gewichtskonstanz getrocknet.

Ausbeute: 85 bis 87 g eines hellgelben Pulvers der Formel

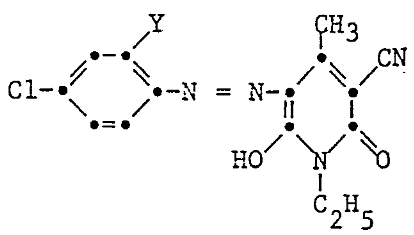

Y = 90% $NO_2$ und 10% Cl,
welches nach entsprechender Aufbereitung Polyester in einem brillanten Gelb anfärbt und "Catalytic Fading" nur in tolerierbarem Masse zeigt.

Beispiel 2

Man dosiert die vorstehend unter Beispiel 1 beschriebene Lösung der Diazoniumsalzmischung zu einer Lösung aus 100 Teilen Wasser, 25 Vol.-Teilen einer wässrigen 10n-Natronlauge und 43,6 Teilen 1-Phenyl-3-methyl-pyrazolon-(5) bei 15 bis 20° C in 20 Minuten gleichmässig zu.

Zur Vervollständigung der Kupplung wird der pH mit ca. 36 Vol.-Teilen einer wässrigen 10n-Natronlauge in 30 Minuten auf 4 bis 4,5 gestellt. Man rührt noch 30 Minuten nach. Die Kupplung ist beendet, wenn sich mit sodaalkalischer H-Säure-Lösung kein violetter Farbstoff mehr bildet.

Die gelbe Suspension wird anschliessend auf 90° C geheizt und 1 Stunde bei 90° C gerührt. Nach Abkühlen auf 60° C wird der Farbstoff der Formel

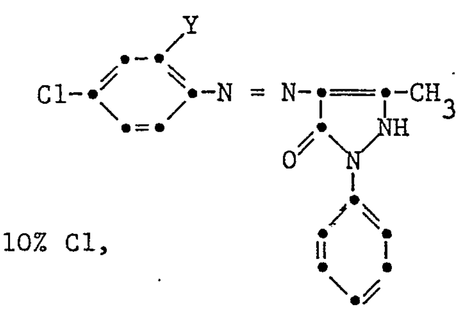

Y = 90% $NO_2$ und 10% Cl,

abfiltriert, mit heissem Wasser salzfrei gewaschen und bei 80° C im Vakuumtrockenschrank bis zur Gewichtskonstanz getrocknet.

Ausbeute: 76 bis 78 g eines orangefarbenen Pulvers, welches nach entsprechender Aufbereitung Polyester in einem rotstichigen Gelb anfärbt.

Beispiel 3-7

Arbeitet man wie im Beispiel 1 beschrieben, verwendet jedoch die in Spalte 2 der folgenden Tabelle aufgeführten Diazokomponenten und die in Spalte 3 aufgeführten Kupplungskomponenten so erhält man die in Spalte 3 aufgeführten Azofarbstoffe. Y bedeutet jeweils ein Gemisch von 75 bis 99 $NO_2$ und 25 bis 1 % Cl.

| Beispiel | Diazokomponente | Kupplungskomponente | Farbstoff (Y = Gemisch aus $NO_2$ und Cl) |
|---|---|---|---|
| 3 | 2-Nitroanilin | 3-Cyan-1-ethyl-6-hydroxy-4-methyl-2-pyridon | 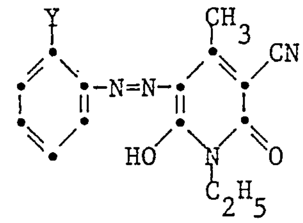 |
| 4 | 4-Brom-2-nitroanilin | 3-Cyan-1-ethyl-6-hydroxy-4-methyl-2-pyridon | 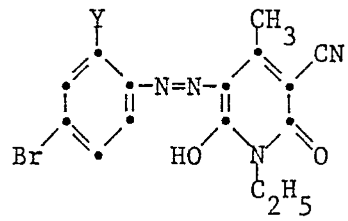 |
| 5 | 2-Nitroanilin | 1-Isopropoxypropyl-3-cyan-4-methyl-6-hydroxy-2-pyridon | 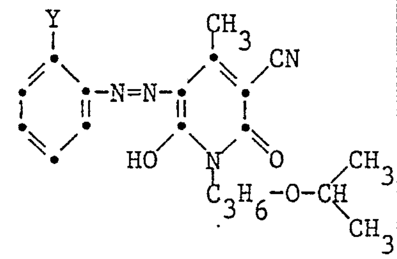 |
| 6 | 2-Nitroanilin | 1-Phenyl-3-methyl-pyrazolon-5 | 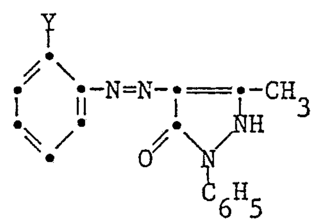 |
| 7 | 4-Brom-2-nitroanilin | 1-Phenyl-3-methyl-pyrazolon 5 | 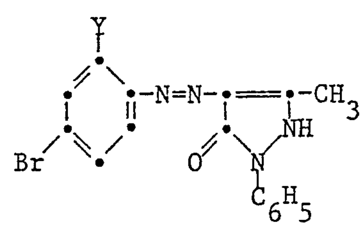 |

Beispiel 8

Arbeitet man genau wie im Beispiel 1 beschrieben, setzt jedoch nach der Diazotierung nur 6.4 Vol.-Teil einer wässrigen 10n-Salzsäure anstelle von 25 Vol.-Teilen zu, so erhält man bei ansonsten gleicher Arbeitsweise eine Farbstoffmischung der im Beispiel 1 angegebenen Formel, worin Y 67 % und $NO_2$ und 33 % Cl bedeutet.

**Patentansprüche**

1. Farbstoffmischungen, bestehend aus 75 bis 99 Gew.% eines Farbstoffes der Formel

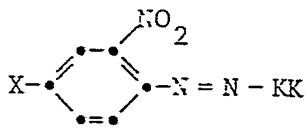

(1)

worin
X Wasserstoff, Chlor, Brom oder Methyl und
KK den Rest einer von wasserlöslichmachenden Gruppen freien Kupplungskomponente bedeutet, und 1 bis 25 Gew.% eines Farbstoffes der Formel

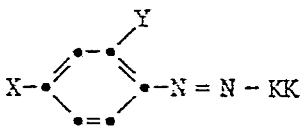

(2)

worin
X und KK die angegebene Bedeutung aufweisen und
Y Chlor oder Brom ist.

2. Farbstoffmischungen gemäss Anspruch 1, bestehend aus 85 bis 95 Gew.% eines Farbstoffes der Formel (1) und 5 bis 15 Gew.% eines Farbstoffes der Formel (2).

3. Farbstoffmischungen gemäss einem der Ansprüche 1 oder 2, worin X Wasserstoff oder vor allem Chlor ist.

4. Farbstoffmischungen gemäss einem der Ansprüche 1 bis 3, worin KK den Rest einer Kupplungskomponente aus der Reihe der Acylacetarylamide, Phenole, Pyridone, Chinoline, Pyrazole, Indole, Diphenylamine, Aniline, Aminopyridine, Pyrimidine, Pyrimidone, Naphthole, Naphthylamine, Aminothiazole, Thiophene oder Hydroxypyridine bedeutet.

5. Farbstoffmischungen gemäss Anspruch 4, worin KK den Rest einer Kupplungskomponente aus der Reihe der Acetoacetanilide, Phenole, Aniline, Diphenylamine, Naphthylamine, Naphthole, Indole, Chinoline, Pyridone, Pyrazole, Chinolone, Aminopyridine, insbesondere 2,6-Diaminopyridine, wobei die genannten heterocyclischen KK bevorzugt sind, insbesondere jene aus der Reihe der Aminopyrazole, Pyrazolone oder vor allem der Pyridone, bedeutet.

6. Farbstoffmischungen gemäss Anspruch 3, worin KK ein Rest der Formel

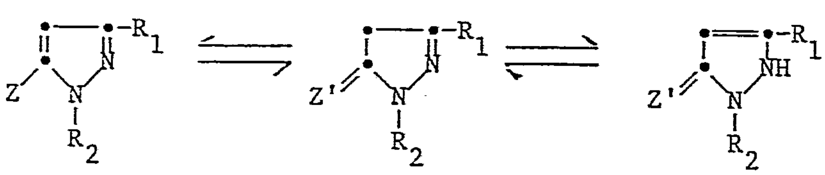

(3)

ist, worin Z OH oder $NH_2$, Z' O oder NH, $R_2$ H, $C_1$-$C_4$-Alkyl, Alkenyl, Cycloalkyl, Aryl, Benzyl oder Phenyläthyl, und $R_1 = R_2$ oder $COOR_2$ oder $CONHR_2$ ist.

7. Farbstoffmischungen gemäss Anspruch 5, worin KK ein Rest der Formel

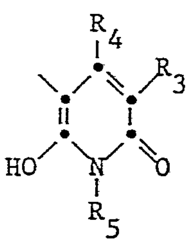

(4)

ist, worin $R_3$ Alkyl, CN, $CONH_2$ oder $SO_2NH_2$, $R_4$ Alkyl und $R_5$ Wasserstoff, Alkenyl, Aryl oder vorzugsweise gegebenenfalls substituiertes $C_1$-$C_8$-Alkyl bedeuten.

8. Farbstoffmischungen gemäss Anspruch 6 oder 7, worin KK der Rest von 1-Phenyl-3-methylpyrazolon-5 oder 1-Ethyl-3-cyan-4-methyl-6-hydroxypyridon-2 ist.

9. Verfahren zur Herstellung von Farbstoffmischungen, bestehend aus 75 bis 99 Gew.% eines Farbstoffes der Formel

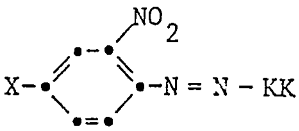

(1)

worin X Wasserstoff, Chlor, Brom oder Methyl und KK den Rest einer von wasserlöslichmachenden Gruppen freien Kupplungskomponente dedeutet, und 1 bis 25 Gew.% eines Farbstoffes der Formel

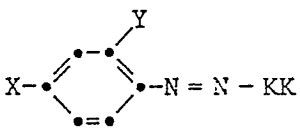

. (2)

worin X und KK die angegebene Bedeutung aufweisen und Y Chlor oder Brom ist, dadurch gekennzeichnet, dass man ein Amin der Formel

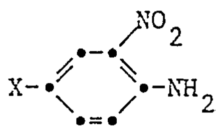

(5)

in einer wässrigen Halogenwasserstoffsäure der Formel HY diazotiert, anschliessend nach Zugabe weiterer Halogenwasserstoffsäure HY bei 20 bis 50° C während 0,5 bis 10 Stunden nachbehandelt und schliesslich die erhaltene Diazoniumsalzlösung auf eine Kupplungskomponente H-KK kuppelt.

10. Verfahren gemäss Anspruch 9, dadurch gekennzeichnet, dass man die Diazotierung bei einer Temperatur zwischen -10° C bis +40° C durchführt.

11. Verfahren gemäss einem der Ansprüche 9 oder 10, dadurch gekennzeichnet, dass man im Anschluss an die Diazotierung 0,5 bis 3 Mol, vorzugsweise 0,5 bis 1 Mol Halogenwasserstoffsäure, vor allem HCl, zusetzt.

12. Verfahren gemäss einem der Ansprüche 9 bis 11, dadurch gekennzeichnet, dass man bei 20 bis 50° C, vorzugsweise 25 bis 45° C, nachbehandelt.

13. Verfahren gemäss einem der Ansprüche 9 bis 12, dadurch gekennzeichnet, dass man während 1 bis 6 Stunden nachbehandelt.

14. Wässrige Farbstoffdispersion, die eine in den Ansprüchen 1 bis 8 definierte Farbstoffmischung und mindestens einen anionischen oder nichtionischen Dispergator enthält.

15. Verwendung einer in einem der Ansprüche 1 bis 8 definierten Farbstoffmischung zum Färben oder Bedrucken von Textilmaterialien aus vollsynthetischen oder halbsynthetischen Stoffen.

16. Verwendung nach Anspruch 15 zum Färben oder Bedrucken von Polyesterfasermaterialien.

17. Verfahren zum Färben oder Bedrucken von Textilmaterialien, dadurch gekennzeichnet, dass man eine in einem der Ansprüche 1 bis 8 definierte Farbstoffmischung auf besagte Matrialien aufbringt.

18. Verfahren nach Anspruch 17 zum Färben oder Bedrucken von Polyesterfasermaterialien.

19. Verfahren nach Anspruch 17 oder 18, dadurch gekennzeichnet, dass man die zu färbenden Materialien in einer wässrigen Dispersion der jeweiligen Farbstoffmischung nach dem Ausziehverfahren behandelt.

20. Die nach einem der Ansprüche 15 bis 19 gefärbten oder bedruckten Textilfasermaterialien.